(19) Europäisches Patentamt
European Patent Office
Office européen des brevets

(11) Publication number : **0 552 577 A1**

# (12) EUROPEAN PATENT APPLICATION

(21) Application number : **92403520.7**

(51) Int. Cl.$^5$ : **H04N 5/21**

(22) Date of filing : **22.12.92**

(30) Priority : **24.12.91 KR 2417991**

(43) Date of publication of application :
**28.07.93 Bulletin 93/30**

(84) Designated Contracting States :
**DE FR GB**

(71) Applicant : **GOLDSTAR CO. Ltd.**
**20, Yoido-Dong, Youngdungpo-Gu**
**Seoul (KR)**

(72) Inventor : **Joo, Kwang Cheol**
**Tesung mansion 402, 237-1, Hyunggok-dong**
**Kumi-si, Kyungsanbuk-do (KR)**
Inventor : **Song, Woo Jin**
**756, Jigok-dong**
**Pohang-si, Kyungsangbuk-do (KR)**

(74) Representative : **Chameroy, Claude et al**
**c/o Cabinet Malemont 42, avenue du Président Wilson**
**F-75116 Paris (FR)**

## (54) Ghost signal removal apparatus for broadcasting reception system.

(57) A ghost signal removal apparatus for a broadcasting reception system, comprising an analog/digital converter (100) for converting a video signal (X(t), a first filtering broadcasting signal into a digital signal (X(n)), a first filtering circuit (200b) being adaptive to a reference signal (X'(n) contained in the digital signal from the analog/digital converter (100), for removing from the digital signal (X(n) from the analog/digital converter (100) a ghost signal component appearing at the front of a main video signal, a second filtering circuit (400b) being adaptive to a reference signal contained in an output signal (XX(n)) from the first filtering circuit (200b), for removing from the fed-back final video signal (Y(n) a ghost signal component appearing at the rear of the main video signal, a subtracter (300) for subtracting an output signal from the second filtering circuit (400b) from the output signal from the first filtering circuit (XX(n) to obtain the final video signal (Y(n) in which the ghost signal has been removed, and a digital/analog converter (500) for converting an output signal from the subtracter (Y(n)) into an analog signal (Y(+).

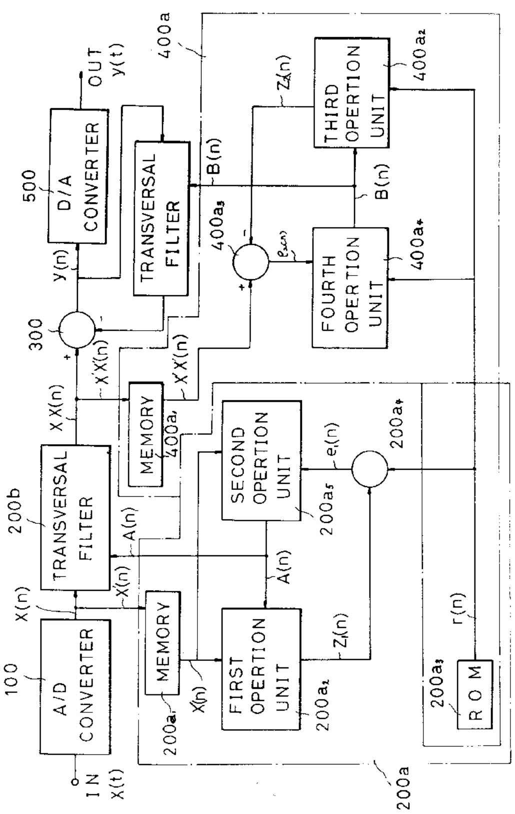


F I G. 6

EP 0 552 577 A1

## BACKGROUND OF THE INVENTION

### Field of the Invention

The present invention relates in general to a broadcasting reception system for receiving a broadcasting signal such as a television signal, and more particularly to a ghost signal removal apparatus for a broadcasting reception system which is capable of removing a ghost signal from a video signal of a received broadcasting signal.

### Description of the Prior Art

Generally, when a broadcasting signal is received at a television receiver which is a kind of broadcasting reception system, a ghost signal which is a kind of noise is contained in the received broadcasting signal. For this reason, the broadcasting signal is transmitted from a broadcasting station, with a reference signal being contained in a main video signal of the broadcasting signal for the purpose of removal of the ghost signal. The reference signal is, typically, contained in the video signal in the unit of one line per field. Alternatively, the reference signal may be contained in the video signal in the unit of one line every eight lines or in the unit of one line per frame. In a NTSC television broadcasting system, each of screens is referred to as the frame, which consists of two fields and has 525 scanning lines.

Referring to Fig. 1, there is shown a block diagram of a conventional ghost signal removal apparatus for the broadcasting reception system such as, for example, the television receiver. As shown in this figure, the conventional ghost signal removal apparatus comprises an analog/digital (A/D) converter 1 for converting a video signal x(t) of a received television signal into a digital signal x(n), a transversal filter 2 for removing from the digital signal x(n) from the A/D converter 1 a ghost signal component appearing at the front of a main video signal, a transversal filter 3 for removing a ghost signal component appearing at the rear of the main video signal, a digital/analog (D/A) converter 4 for converting the ghost signal-removed final video signal y(n) into an analog signal, a subtracter 5 for subtracting an output signal from the transversal filter 3 from an output signal from the transversal filter 2 and outputting the subtracted signal as the final video signal y(n) to the D/A converter 4, a memory 6 for storing a reference signal x'(n) which is contained in the digital video signal x(n) from the A/D converter 1, a memory 9 for storing the ghost signal-removed final video signal y(n) from the subtracter 5, a memory 12 for storing an error signal e(n), a filter coefficient generator 7 for performing a least mean square (LMS) algorithm using the reference signal x'(n) stored in the memory 6 and the error signal e(n) stored in the memory 12 to obtain a filter coefficient A(n) of the transversal filter 2, a filter coefficient generator 8 for performing a least mean square (LMS) algorithm using the final video signal y(n) stored in the memory 9 and the error signal e(n) stored in the memory 12 to obtain a filter coefficient B(n) of the transversal filter 3, a memory 10 for storing a predetermined reference signal r(n) for removal of the ghost signal which is the same as a reference signal transmitted from a broadcasting station, and a subtracter 11 for subtracting the predetermined reference signal r(n) from the memory 10 from the final video signal y(n) and outputting the subtracted signal as the error signal e(n).

The operation of the conventional ghost signal removal apparatus with the above-mentioned construction will hereinafter be described.

The broadcasting signal transmitted from the broadcasting station through an antenna is reflected by objects such as buildings, mountains and etc. and then received at the television receivers with a time difference. The video signal x(t) of the received broadcasting signal can be expressed by the following equation (1) with respect to time t.

$$x(t) = .... a_{-2}u(t-2) + a_{-1}u(t-1) + u(t) + a_1u(t+1) + a_2u(t+2) + .... \quad (1)$$

(where, a < 1)

Herein, the u(t) term represents the main video signal component in Fig. 2 which is a diagram illustrating a screen which contains the ghost signal components, the terms positioned at the front of the u(t) term represen! the ghost signal components appearing at the front of the main video signal and the terms positioned at the rear of the u(t) term represent the ghost signal components appearing at the rear of the main video signal.

The video signal x(t) of the television signal received in this manner is converted into the digital signal x(n) (where, n is the sample number) by the A/D converter 1, which then applies the digital signal x(n) to the transversal filter 2.

At this time, only the reference signal x'(n) contained in the digital signal x(n) from the A/D converter 1 is stored in the memory 6 and the filter coefficient generator 7 obtains the filter coefficient A(n) of the transversal filter 2 by performing the least mean square (LMS) algorithm using the reference signal x'(n) stored in the memory 6 and the error signal e(n) stored in the memory 12 and feeds the obtained filter coefficient A(n) to the transversal filter 2.

The transversal filter 2 adjusts its filter coefficient in accordance with the filter coefficient A(n) from the filter coefficient generator 7 and filters the digital signal x(n) from the A/D converter 1 on the basis of the adjusted filter coefficient, thereby to output the video signal in which has been removed the ghost signal component at the front of the main video signal. The video signal from the transversal filter 2 is fed to the subtracter 5.

The transversal filter 3 inputs the final video signal y(n) and adjusts its filter coefficient in accordance with the filter coefficient B(n) from the filter coefficient generator 8. The transversal filter 3 then filters the final video signal y(n) on the basis of the adjusted filter coefficient, thereby to output the video signal in which has been removed the ghost signal component at the rear of the main video signal. The video signal from the transversal filter 3 is fed to the subtracter 5.

The filter coefficient generator 8 obtains the filter coefficient B(n) of the transversal filter 3 by performing the least mean square (LMS) algorithm using the final video signal y(n) stored in the memory 9 and the error signal e(n) stored in the memory 12.

The subtracter 5 subtracts the output signal from the transversal filter 3 from the output signal from the transversal filter 2 and outputs the subtracted signal as the ghost signal-removed final video signal y(n) to the D/A converter 4, which then converts the ghost signal-removed final video signal y(n) into the analog signal y(t).

The memory 6 stores the reference signal x'(n) for removal of the ghost signal, which is contained in the video signal transmitted from the broadcasting station, and then feeds the stored reference signal x'(n) to the filter coefficient generator 7 as a signal for performance of the least mean square (LMS) algorithim. The memory 9 stores the final video signal y(n) from the subtracter 5 and then feeds the stored final video signal y(n) to the filter coefficient generator 8 as a signal for performance of the least mean square (LMS) algorithm.

The subtracter 11 receives the final video signal y(n) from the subtracter 5 and the ghost signal removal reference signal r(n) from the memory 10 and obtains the error signal e(n) from the inputted signals, which is then stored in the memory 12.

The memory 12 then feeds the stored error signal e(n) to the filter coefficient generators 7 and 8 as a signal for performance of the least mean square (LMS) algorithm.

The transversal filters 2 and 3 are a kind of adaptive digital filter.

Referring to Fig. 3, there is shown a block diagram of the transversal filters 2 and 3. As shown in this drawing, the transversal filter 2 includes a delay element 2a for delaying and storing the digital signal inputted therein by a plurality of steps, a plurality of gain adjustment taps 2b, each for adjusting a gain of a corresponding one of the signals stored by the plurality of steps in accordance with a corresponding one of elements of the filter coefficient A(n) from the filter coefficient generator 7, and an adder 2c for adding output signals from the plurality of gain adjustment taps 2b. Similarly, the transversal filter 3 includes a delay element 3a for delaying and storing the digital signal inputted therein by a plurality of steps, a plurality of gain adjustment taps 3b, each for adjusting a gain of a corresponding one of the signals stored by the plurality of steps in accordance with a corresponding one of elements of the filter coefficient B(n) from the filter coefficient generator 8, and an adder 3c for adding output signals from the plurality of gain adjustment taps 3b.

In the transversal filter 2, the delay element 2a delays the inputted digital signal or the video signal x(n) by n-1 to n-NF steps and sequentially stores the delayed NF samples. Each of the NF gain adjustment taps 2b reads a corresponding one of the stored NF samples and adjusts the gain of the read sample in accordance with a corresponding one of the elements $a_1$ to $a_{NF}$ of the filter coefficient A(n) from the filter coefficient generator 7 which is obtained as a result of the performance of the least mean square (LMS) algorithm. The adder 2c adds the output signals from the gain adjustment taps 2b and outputs the added signal as the video signal in which has been removed the ghost signal component at the front of the main video signal.

In the transversal filter 2, the delay element 3a delays the inputted digital signal or the fed-back final video signal y(n) by n-1 to n-NB steps and sequentially stores the delayed NB samples. Each of the NB gain adjustment taps 3b reads a corresponding one of the stored NB samples and adjusts the gain of the read sample in accordance with a corresponding one of the elements $b_1$ to $b_{NB}$ of the filter coefficient B(n) from the filter coefficient generator 8 which is obtained as a result of the performance of the least mean square (LMS) algorithm. The adder 3c adds the output signals from the gain adjustment taps 3b and outputs the added signal as the video signal in which has been removed the ghost signal component at the rear of the main video signal.

The subtracter 5 subtracts the output signal from the transversal filter 3 from the output signal from the transversal filter 2 and outputs the subtracted signal as the ghost signal-removed final video signal y(n), which can be expressed by the following equation (2):

$$y(n) = \sum_{i=0}^{N} ai(n)x(n-i) - \sum_{j=0}^{N} bj(n)y(n-j) \quad (2)$$

where, the ai and bj terms are the filter coefficients or gain adjustment coefficients which are adjusted as a result of the performance of the least mean square (LMS) algorithm, i and j are progression variables and N is a positive integer.

The video signal in Fig. 1 can be expressed as the sample values as follows:

Namely, the reference signal x'(n) which is fed from the memory 6 to the filter coefficient generator 7 can be expressed by the following equation (3):

$$x'(n) = [x'(n)x'(n-1) \ldots x'(n-NF)] \quad (3)$$

The final video signal y(n) which is fed from the memory 9 to the filter coefficient generator 8 can be expressed by the following equation (4):

$$y(n) = [y(n-1) \ldots y(n-NB)] \quad (4)$$

The ghost signal removal reference signal r(n) which is stored in the memory 10 can be expressed by the following equation (5):

$$r(n) = [r(n)r(n-1)r(n-2) \ldots r(n-NB)] \quad (5)$$

The error signal e(n) which is outputted from the subtracter 11 can be expressed by the following equation (6):

$$e(n) = r(n) - y(n) \quad (6)$$

The filter coefficient generator 7 performs the algorithm with respect to the inputted signals x'(n) and e(n) as follows:

$$A(n) = A(n-1) + 2K_1e(n-1)x'(n-1) \quad (7)$$

The filter coefficient generator 7 obtains the filter coefficient A(n) of the transversal filter 2 by performing the algorithm expressed by the above equation (7). The elements $a_1$-$a_{NF}$ of the filter coefficient A(n) from the filter coefficient generator 7 are applied to the gain adjustment taps 2b in the transversal filter 2, respectively, and can be expressed by the following equation (8):

$$A(n) = [a_0(n)a_1(n)a_2(n) \ldots a_{NF}(n)]^T \quad (8)$$

The filter coefficient A(n) is repeatedly obtained such that it is adaptive to the reference signals which are contained in the successively inputted video signals, for removal of the ghost signal components at the front of the main video signals in the transversal filter 2.

The filter coefficient generator 8 performs the algorithm with respect to the inputted signals y(n) and e(n) as follows:

$$B(n) = B(n-1) + 2K_2e(n-1)y(n-1) \quad (9)$$

The filter coefficient generator 8 obtains the filter coefficient B(n) of the transversal filter 3 by performing the algorithm expressed by the above equation (9). The elements $b_1$-$b_{NF}$ of the filter coefficient B(n) from the filter coefficient generator 8 are applied to the gain adjustment taps 3b in the transversal filter 3, respectively, and can be expressed by the following equation (10):

$$B(n) = [b_0(n)b_1(n)b_2(n) \ldots b_{NB}(n)]^T \quad (10)$$

The filter coefficient B(n) is repeatedly obtained such that it is adaptive to the reference signals which are contained in the successively inputted video signals, for removal of the ghost signal components at. the rear of the main video signals in the transversal filter 3. In the algorithms for the filter coefficients A(n) and B(n), $K_1$ and $K_2$ are inherent constants of the transversal filters 2 and 3 which are determined suitably to convergence speeds and stabilities of the transversal filters 2 and 3, respectively.

As mentioned above, the conventional ghost signal removal apparatus comprises the transversal filters 2 and 3 as the adaptive digital filters and the filter coefficient generators 7 and 8 which perform the least mean square (LMS) algorithm to obtain the filter coefficients A(n) and B(n) of the transversal filters 2 and 3, respectively, thereby to remove the ghost signal components at the front and rear of the main video signal.

However, the conventional ghost signals removal apparatus has the following disadvantages:

First, since the least mean square (LMS) algorithms for removal of the ghost signal components at the front and rear of the main video signal are not performed independently, the ghost signal removal process is reduced in speed due to the resulting serial process.

Second, since the transversal filter 3 placed on the feedback path has an effect on the generation of the filter coefficient B(n), the stability of the ghost signal removal operation cannot be assured.

For this reason, there may be a requirement as follows:

There may be required two operation means which are capable of independently performing operations for generation of filter coefficients for removal of the ghost signal components at the front and rear of the main

video signal. Therefore, with the two operation means, the least mean square (LMS) algorithms can be performed independently and the resulting parallel process is enabled, resulting in prevention of the delay in the ghost signal removal process due to the serial process. Furthermore, since there is removed the effect of the transversal filter on the feedback path on the generation of the filter coefficient B(n), the stability of the ghost signal removal operation can be assured.

## SUMMARY OF THE INVENTION

Therefore, the present invention has been made in view of the above problems, and it is an object of the present invention to provide a ghost signal removal apparatus for a broadcasting reception system which is capable of shortening a period of time required to remove a ghost signal.

It is another object of the present invention to provide a ghost signal removal apparatus for a broadcasting reception system which is capable of removing a ghost signal stably.

In accordance with the present invention, the above and other objects can be accomplished by a provision of a ghost signal removal apparatus for a broadcasting reception system, comprising: analog/digital converting means for converting a video signal of a received broadcasting signal into a digital signal; first filtering means being adaptive to a reference signal contained in the digital signal from said analog/digital converting means, for removing from the digital signal from said analog/digital converting means a ghost signal component appearing at the front of a main video signal; second filtering means being adaptive to a reference signal contained in an output signal from said first filtering means, for removing from the fed-back final video signal a ghost signal component appearing at the rear of the main video signal; subtracting means for subtracting an-output signal from said second filtering means from the output signal from said first filtering means to obtain the final video signal in which the ghost signal has been removed; and digital/analog converting means for converting an output signal from said subtracting means into an analog signal.

## BRIEF DESCRIPTION OF THE DRAWINGS

The above and other objects, features and advantages of the present invention will be more clearly understood from the following detailed description taken in conjunction with the accompanying drawings, in which:

Fig. 1 is a block diagram of a conventional ghost signal removal apparatus for a broadcasting reception system;

Fig. 2 is a diagram illustrating a screen which contains a ghost signal;

Fig. 3 is a block diagram of transversal filters in the apparatus in Fig. 1;

Fig. 4 is a block diagram of a ghost signal removal apparatus for a broadcasting reception system in accordance with the present invention;

Fig. 5a is a block diagram of a first filtering circuit in the apparatus in Fig. 4;

Fig. 5b is a block diagram of a second filtering circuit in the apparatus in Fig. 4; and

Fig. 6 is a detailed block diagram of the ghost signal apparatus in Fig. 4 in accordance with an embodiment of the present invention.

## DETAILED DESCRIPTION OF THE PREFERRED EMBODIMENT

Referring to Fig. 4, there is shown a block diagram of a ghost signal removal apparatus for a broadcasting reception system such as, for example, a television receiver of a NTSC system, in accordance with the present invention. As shown in this figure, the ghost signal removal apparatus of the present invention comprises an analog/digital (A/D) converter 100 for converting a video signal x(t) of a received television signal into a digital signal x(n), a first filtering circuit 200 being adaptive to a reference signal x'(n) contained in the digital signal x(n) from the A/D converter 100, for removing from the digital signal x(n) a ghost signal component appearing at the front of a main video signal, a second filtering circuit 400 being adaptive to a reference signal x'x'(n) contained in an output signal xx(n) from the first filtering circuit 200, for removing from the fed-back final video signal y(n) a ghost signal component appearing at the rear of the main video signal, a first subtracter 300 for subtracting an output signal from the second filtering circuit 400 from the output signal xx(n) from the first filtering circuit 200 to obtain the final video signal y(n) in which the ghost signal has been removed, and a digital/analog (D/A) converter 500 for converting an output signal y(n) from the first subtracter 300 into an analog signal y(t).

Referring to Fig. 5a, there is shown a block diagram of the first filtering circuit 200 in the apparatus in Fig. 4. As shown in this drawing, the first filtering circuit 200 includes a first filter coefficient generator 200a for obtaining a first filter coefficient A(n) from the digital signal x(n) from the A/D converter 100 and a transversal

filter 200b as a first adaptive digital filter for removing from the digital signal x(n) from the A/D converter 100 the ghost signal component appearing at the front of the main video signal in accordance with the first filter coefficient A(n) from the first filter coefficient generator 200a.

Referring to Fig. 5b, there is shown a block diagram of the second filtering circuit 400 in the apparatus in Fig. 4. As shown in this drawing, the second filtering circuit 400 includes a second filter coefficient generator 400a for obtaining a second filter coefficient B(n) from the output signal from the first filtering circuit 200 and a transversal filter 400b as a second adaptive digital filter for removing from the output signal y(n) from the first subtracter 300 the ghost signal component appearing at the rear of the main video signal in accordance with the second filter coefficient B(n) from the second filter coefficient generator 400a.

Referring to Fig. 6, there is shown a detailed block diagram of the ghost signal apparatus in Fig. 4 in accordance with an embodiment of the present invention. As shown in this figure, the first filter coefficient generator 200a in Fig. 5a includes a line memory 200a1 as a first memory for storing the reference signal x'(n) in the output signal x(n) from the A/D converter 100 in the unit of line, a first operation unit 200a2 for convoluting the first filter coefficient A(n) and the reference signal x'(n) stored in the line memory 200a1, a read only memory (ROM) 200a3 as a second memory for storing a predetermined reference signal r(n) which is the same as a reference signal transmitted from a broadcasting station, a second subtracter 200a4 for subtracting an output signal $z_1(n)$ from the first operation unit 200a2 from the predetermined reference signal r(n) stored in the ROM 200a3 to obtain a first error signal $e_1(n)$, and a second operation unit 200a5 for performing a least mean square (LMS) algorithm using the reference signal x'(n) stored in the line memory 200a1 and the first error signal $e_1(n)$ from the second subtracter 200a4 to obtain the first filter coefficient A(n).

Also, the second filter coefficient generator 400a in Fig. 5b includes the ROM 200a3 as the second memory for storing the predetermined reference signal r(n) which is the same as the reference signal transmitted from the broadcasting station, a line memory 400a1 as a third memory for storing the reference signal x'x'(n) in the output signal xx(n) from the first filtering circuit 200 in the unit of line, a third operation unit 400a2 for convoluting the second filter coefficient B(n) and the predetermined reference signal r(n) stored in the ROM 200a3, a third subtracter 400a3 for subtracting an output signal $z_2(n)$ from the third operation unit 400a2 from the reference signal x'x'(n) stored in the line memory 400a1 to obtain a second error signal $e_2(n)$, and a fourth operation unit 400a4 for performing a least mean square (LMS) algorithm using the predetermined reference signal r(n) stored in the ROM 200a3 and the second error signal $e_2(n)$ from the third subtracter 400a3 to obtain the second filter coefficient B(n).

As mentioned above, the first and second filter coefficient generators 200a and 400a have in common the ROM 200a3 as the second memory for storing the predetermined reference signal r(n) which is the same as the reference signal transmitted from the broadcasting station.

In accordance with the construction in Fig. 6, the first operation unit 200a2, the second operation unit 200a5 and the second subtracter 200a4 in the first filter coefficient generator 200a cooperate to approximate the ghost signal removal reference signal x'(n) contained in the video signal x(n) of the received broadcasting signal to the predetermined reference signal r(n) stored in the ROM 200a3. Also, the third operation unit 400a2, the fourth operation unit 400a4 and the third subtracter 400a3 in the second filter coefficient generator 400a cooperate to approximate the predetermined reference signal r(n) stored in the ROM 200a3 to the reference signal x'x'(n) contained in the output signal from the first filtering circuit 200.

In this manner, the first and second filter coefficients A(n) and B(n) can be obtained independently. This is a representative one of features of the present invention as compared with the prior art.

The operation of the ghost signal removal apparatus with the above-mentioned construction in accordance with the present invention will hereinafter be described in detail with reference to Fig. 6.

The video signal x(t) of the received broadcasting signal is first received by the A/D converter 100, which then converts the received video signal x(t) into the digital signal x(n) (where, n is the sample number). The ghost signal removal reference signal x'(n) contained in the digital video signal x(n) is stored in the line memory 200a1. The transversal filter 200b acts to remove from the digital video signal x(n) from the A/D converter 100 the ghost signal component at the front of the main video signal and to output the resulting video signal xx(n) to the first subtracter 300. At this time, the ghost signal removal reference signal x'x'(n) contained in the video signal xx(n) is stored in the line memory 400a1.

The first subtracter 300 subtracts the video signal in which has been removed the ghost signal component at the rear of the main video signal, from the output signal xx(n) from the transversal filter 200b in which has been removed the ghost signal component at the front of the main video signal, thereby to obtain the final video signal y(n).

The ghost signal-removed final video signal y(n) from the first subtracter 300 is converted into the original analog video signal y(t) in the D/A converter 500.

Herein, the constructions of the transversal filters 200b and 400b in the first and second filtering circuits

200 and 400 are the same as those in Fig. 3 and a description thereof will thus be omitted. In operation, the transversal filter 200b delays the inputted digital signal by the plurality of steps and sequentially stores the delayed samples. The transversal filter 200b then adjusts the gains of the samples in accordance with the elements $a_1$ to $a_{NF}$ of the filter coefficient A(n) from the filter coefficient generator 200a which is obtained as a result of the performance of the least mean square (LMS) algorithm. The adder 2c in the transversal filter 200b adds the gain-adjusted samples and outputs the added signal as the video signal in which has been removed the ghost signal component at the front of the main video signal. Similarly, the transversal filter 400b delays the inputted digital signal by the plurality of steps and sequentially stores the delayed samples. The transversal filter 400b then adjusts the gains of the samples in accordance with the elements $b_1$ to $b_{NB}$ of the filter coefficient B(n) from the filter coefficient generator 400a which is obtained as a result of the performance of the least mean square (LMS) algorithm. The adder 3c in the transversal filter 400b adds the gain-adjusted samples and outputs the added signal as the video signal in which has been removed the ghost signal component at the rear of the main video signal.

The reference signal x'(n) from the line memory 200a1 is applied to the first operation unit 200a2 and to the second operation unit 200a5 which also receives the first error signal $e_1(n)$ from the second subtracter 200a4. The second operation unit 200a5 performs the least mean square (LMS) algorithm with respect to the inputted signals x'(n) and $e_1(n)$ as follows:

$$A(n) = A(n-1) + 2K_1 e_1(n-1)x'(n-1) \quad (11)$$

The first filter coefficient A(n) obtained as a result of the above operation is applied to the transversal filter 200b for adjustment of the filter coefficient of the transversal filter 200b and also to the first operation unit 200a2. The first operation unit 200a2 performs the convolution algorithm with respect to the inputted signals x'(n) and A(n) as follows:

$$z_1(n) = \sum_{i=0}^{N} Ai(n) \cdot x'(n-i) = A^T(n) \cdot x(n) \text{ -------- } (12)$$

The signal $z_1(n)$ obtained as a result of the above operation is applied to the second subtracter 200a4. The second subtracter 200a4 subtracts the signal $z_1(n)$ from the first operation unit 200a2 from the predetermined reference signal r(n) stored in the ROM 200a3, thereby to obtain the first error signal $e_1(n)$ which is necessary to the performance of the least means square (LMS) algorithm of the second operation unit 200a5.

The ghost signal removal reference signal r(n) which is stored in the ROM 200a3 can be expressed by the following equation (13):

$$r(n) = [r(n)r(n-1)r(n-2) \ldots r(n-NB)] \quad (13)$$

The first error signal $e_1(n)$ which is outputted from the second subtracter 200a4 can be expressed by the following equation (14):

$$e_1(n) = r(n) - z_1(n) \quad (14)$$

The second operation unit 200a5 obtains the first filter coefficient A(n) for adjustment of the filter coefficient of the transversal filter 200b by performing the least mean square (LMS) algorithm expressed by the above equation (11).

Then, the error between the received reference signal x'(n) and the predetermined reference signal r(n) is minimized and the first filter coefficient A(n) of a new value is obtained on the basis of the minimized error. The signal $z_1(n)$ and first error signal $e_1(n)$ of new values are obtained on the basis of the first filter coefficient A(n) of the new value. The first error signal $e_1(n)$ of the new value is applied to the second operation unit 200a5, which then obtains the first filter coefficient A(n) of a new value on the basis of the newly minimized error.

With a repetition of the above operation, the transversal filter 200b is adaptive to the received reference signal x'(n) to remove the ghost signal component at the front of the main video signal.

The reference signal x'x'(n) contained in the video signal xx(n) from the transversal filter 200b is stored in the line memory 400a1. The reference signal x'x'(n) from the line memory 400a1 is applied to the third subtracter 400a3 and can be expressed by the following equation (15):

$$x'x'(n) = [x'x'(n)x'x'(n-1)x'x'(n-2) \ldots x'x'(n-NF)] \quad (15)$$

The third subtracter 400a3 inputs the reference signal x'x'(n) from the line memory 400a1 and the output signal $z_2(n)$ from the third operation unit 400a2 and performs the operation with respect to the inputted signals as follows:

$$e_2(n) = x'x'(n) - z_2(n) \quad (16)$$

The third subtracter 400a3 obtains the second error signal $e_2(n)$ as a result of the above operation and applies it to the fourth operation unit 400a4 for performance of the least mean square (LMS) algorithm of the fourth

operation unit 400a4.

The fourth operation unit 400a4 performs the least mean square (LMS) algorithm with respect to the inputted signals $e_2(n)$ and $r(n)$ as follows:

$$B(n) = B(n-1) + 2K_2e_2(n-1)r(n-1) \quad (17)$$

The second filter coefficient B(n) obtained as a result of the above operation corresponds to approximation of the reference signal r(n) to the reference signal x'x'(n) and is used for adjustment of the filter coefficient of the transversal filter 400b.

The second filter coefficient B(n) outputted from the fourth operation unit 400a4 is again applied to the third operation unit 400a2 and can be expressed by the following equation (18):

$$B(n) = [b_0(n)b_1(n)b_2(n)b_3(n) .... b_{NB}(n)]^T \quad (18)$$

where, T represents a matrix transform.

The third operation unit 400a2 performs the convolution algorithm with respect to the inputted signals B(n) and r(n) as follows:

$$z_2(n) = \sum_{j=0}^{N} Bj(n)r(n-j) = [B(n)]^T \cdot r(n) \text{ -------- } (19)$$

The signal $z_2(n)$ obtained as a result of the above operation is applied to the third subtracter 400a3.

The third subtracter 400a3 performs the subtraction operation with respect to the inputted signals x'x'(n) and $z_2(n)$, thereby to obtain the second error signal $e_2(n)$ which can be expressed by the following equation (20):

$$e_2(n) = r(n) - z_2(n) \quad (20)$$

The second error signal $e_2(n)$ obtained a result of the above operation is applied to the fourth operation unit 400a4 together with the reference signal r(n) such that the fourth operation unit 400a4 performs the least mean square (LMS) algorithm for minimization of error.

As mentioned above, the fourth operation unit 400a4 obtains the second filter coefficient B(n) for adjustment of the filter coefficient of the transversal filter 400b by performing the least mean square (LMS) algorithm.

Then, the error between the reference signal x'x'(n) and the predetermined reference signal r(n) is minimized and the second filter coefficient B(n) of a new value is obtained on the basis of the minimized error. The signal $z_2(n)$ and second error signal $e_2(n)$ of new values are obtained on the basis of the second filter coefficient B(n) of the new value. The second error signal $e_2(n)$ of the new value is applied to the fourth operation unit 400a4, which then obtains the second filter coefficient B(n) of a new value on the basis of the newly minimized error.

With a repetition of the above operation, the transversal filter 400b is adaptive to the received reference signal x'x'(n) to remove the ghost signal component at the rear of the main video signal.

In this manner, the filter coefficient of the transversal filter 200b is adjusted by the first and second operation units 200a2 and 200a5 and the filter coefficient of the transversal filter 400b is adjusted by the third and fourth operation units 400a2 arid 400a4. Therefore, the ghost signal component at the front of the main video signal u(n) which can be expressed by the below equation (22) and the ghost signal component at the rear of the main video signal u(n) which can be expressed by the below equation (23) can be removed from the video signal which can be expressed by the below equation (21), respectively, by the first and second filtering circuits 200 and 400.

$$x(n) = .... + a_{-2}u(n-2) + a_{-1}u(n-1) + u(n) + a_1u(n+1) + a_2u(n+2) + \quad (21)$$

$$.... + a_{-2}u(n-2) + a_{-1}u(n-1) \quad (22)$$

$$a_1u(n+1) + a_2u(n+2) .... \quad (23)$$

Although the preferred embodiment of the present invention have been disclosed with reference to Fig. 6 which illustrates the construction of the television receiver which is capable of receiving the broadcasting signal of the NTSC system, the present invention is not limited thereto and may be applied to another broadcasting reception system such as, for example, a satellite broadcasting reception system.

As hereinbefore described, the present invention can provide the following advantages:

First, since the least mean square (LMS) algorithms for obtaining the first and second filter coefficients are performed independently, the parallel process for removal of the ghost signal components at the front and rear of the main video signal is enabled. The parallel process has the effect of shortening the period of time required to remove the ghost signal.

Second, since there is removed the effect of the transversal filter, which is disposed on the feedback path

for removal of the ghost signal component at the rear of the main video signal, on the generation of the second filter coefficient, the stability of the ghost signal removal operation can be assured.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A ghost signal removal apparatus for a broadcasting reception system, comprising:

   analog/digital converting means for converting a video signal of a received broadcasting signal into a digital signal;

   first filtering means being adaptive to a reference signal contained in the digital signal from said analog/digital converting means, for removing from the digital signal from said analog/digital converting means a ghost signal component appearing at the front of a main video signal;

   second filtering means being adaptive to a reference signal contained in an output signal from said first filtering means, for removing from the fed-back final video signal a ghost signal component appearing at the rear of !he main video signal;

   subtracting means for subtracting an output signal from said second filtering means from the output signal from said first filtering means to obtain the final video signal in which the ghost signal has been removed; and

   digital/analog converting means for converting an output signal from said subtracting means into an analog signal.

2. A ghost signal removal apparatus for a broadcasting reception system, as set forth in Claim 1, wherein said first filtering means includes:

   a first filter coefficient generator for obtaining a first filter coefficient from the digital signal from said analog/digital converting means; and

   a first adaptive digital filter for removing from the digital signal from said analog/digital converting means the ghost signal component appearing at the front of the main video signal in accordance with the first filter coefficient from said first filter coefficient generator.

3. A ghost signal removal apparatus for a broadcasting reception system, as set forth in Claim 1, wherein said second filtering means includes:

   a second filter coefficient generator for obtaining a second filter coefficient from the output signal from said first filtering means; and

   a second adaptive digital filter for removing from the output signal from said subtracting means the ghost signal component appearing at the rear of the main video signal in accordance with the second filter coefficient from said second filter coefficient generator.

4. A ghost signal removal apparatus for a broadcasting reception system, as set forth in Claim 2, wherein said first adaptive digital filter is a transversal filter.

5. A ghost signal removal apparatus for a broadcasting reception system, as set forth in Claim 3, wherein said second adaptive digital filter is a transversal filter.

6. A ghost signal remo.val apparatus for a broadcasting reception system, as set forth in Claim 4, wherein said transversal filter includes:

   a delay element for delaying and storing the digital signal inputted therein by a plurality of steps;

   a plurality of gain adjustment taps, each for adjusting a gain of a corresponding one of the signals stored by the plurality of steps in accordance with a corresponding one of elements of the first filter coefficient from said first filter coefficient generator; and

   an adder for adding output signals from said plurality of gain adjustment taps.

7. A ghost signal removal apparatus for a broadcasting reception system, as set forth in claim 5, wherein said transversal filter includes:

   a delay element for delaying and storing the digital signal inputted therein by a plurality of steps;

   a plurality of gain adjustment taps, each for adjusting a gain of a corresponding one of the signals stored by the plurality of steps in accordance with a corresponding one of elements of the second filter

coefficient from said second filter coefficient generator; and

an adder for adding output signals from said plurality of gain adjustment taps.

**8.** A ghost signal removal apparatus for a broadcasting reception system, as set forth in Claim 2, wherein said first filter coefficient generator includes:

a first memory for storing the reference signal contained in the output signal from said analog/digital converting means;

a first operation unit for convoluting the inputted first filter coefficient and the reference signal stored in said first memory;

a second memory for storing a predetermined reference signal which is the same as a reference signal transmitted from a broadcasting station;

a first subtracter for subtracting an output signal from said first operation unit from the predetermined reference signal stored in said second memory to obtain a first error signal; and

a second operation unit for performing a least mean square algorithm using the reference signal stored in said first memory and the first error signal from said first subtracter to obtain the first filter coefficient.

**9.** A ghost signal removal apparatus for a broadcasting reception system, as set forth in Claim 8, wherein said first memory is a line memory.

**10.** A ghost signal removal apparatus for a broadcasting reception system, as set forth in Claim 8, wherein said first operation unit performs the following convolution algorithm:

$$z_I(n) = \sum_{i=0}^{N} Ai(n) \cdot x'(n-i)$$

where, $z_1$ is the output signal from the first operation unit, A is the first filter coefficient, x' is the reference signal stored in the first memory, N is a positive integer and i is the index number.

**11.** A ghost signal removal apparatus for a broadcasting reception system, as set forth in Claim 8, wherein said second memory is a ROM.

**12.** A ghost signal removal apparatus for a broadcasting reception system, as set forth in Claim 8, wherein said second operation unit performs the following least mean square algorithm:

$$A(n) = A(n-1) + 2K_1e_1(n-1)x'(n-1)$$

where, A is the first filter coefficient, $k_1$ is a constant, $e_1$ is the first error signal, x' is the reference signal stored in the first memory and n-1 is the previous first filter coefficient.

**13.** A ghost signal removal apparatus for a broadcasting reception system, as set forth in Claim 3, wherein said second filter coefficient generator includes:

a second memory for storing a predetermined reference signal which is the same as a reference signal transmitted from a broadcasting station;

a third memory for storing the reference signal contained in the output signal from said first filtering means;

a third operation unit for convoluting the second filter coefficient and the predetermined reference signal stored in said second memory;

a second subtracter for subtracting an output signal from said third operation unit from the reference signal stored in said third memory to obtain a second error signal; and

a fourth operation unit for performing a least mean square algorithm using the predetermined reference signal stored in said second memory and the second error:signal from said second subtracter to obtain the second filter coefficient.

**14.** A ghost signal removal apparatus for a broadcasting reception system, as set forth in Claim 13, wherein said third memory is a line memory.

**15.** A ghost signal removal apparatus for a broadcasting reception system, as set forth in Claim 13, wherein said third operation unit performs the following convolution algorithm:

$$z_2(n) = \sum_{j=0}^{N} Bj(n)r(n-j)$$

where, $z_2$ is the output signal from the third operation unit, B is the second filter coefficient, r is the reference signal stored in the second memory, N is a positive integer and j is the index number.

**16.** A ghost signal removal apparatus for a broadcasting reception system, as set forth in Claim 13, wherein said fourth operation unit performs the following least mean square algorithm:

$$B(n) = B(n-1) + 2K_2e_2(n-1)r(n-1)$$

where, B is the second filter coefficient, $k_2$ is a constant, $e_2$ is the second error signal, r is the reference signal stored in the second memory and n-1 is the previous second filter coefficient.

**17.** A ghost signal removal apparatus for a broadcasting reception system, as set forth in Claim 1, wherein said broadcasting signal is a television signal of a NTSC system.

FIG. 1

PRIOR ART

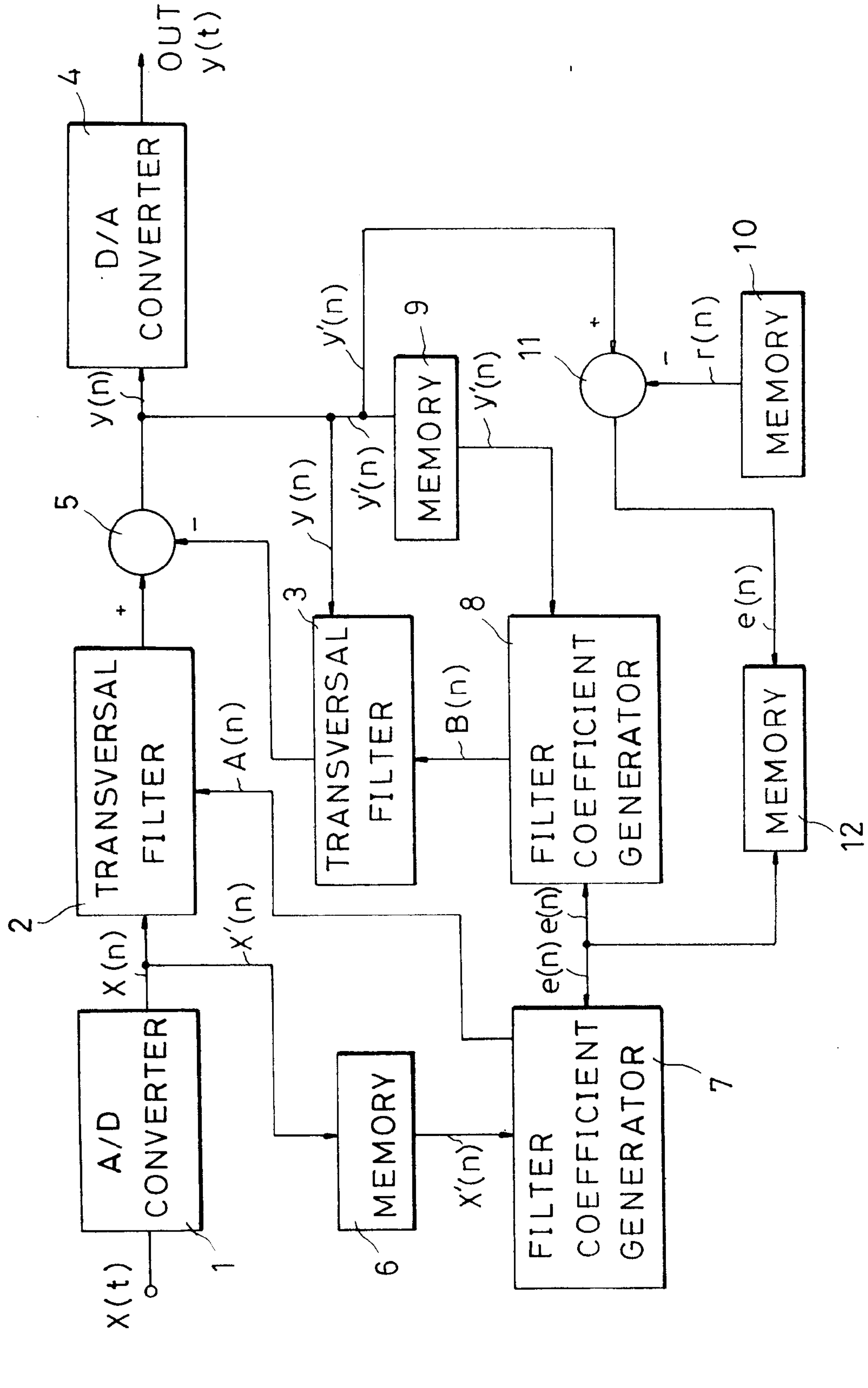

F I G. 2

PRIOR ART

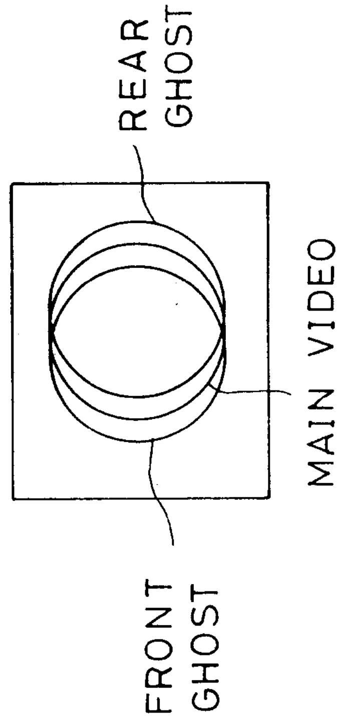


F I G. 3

PRIOR ART

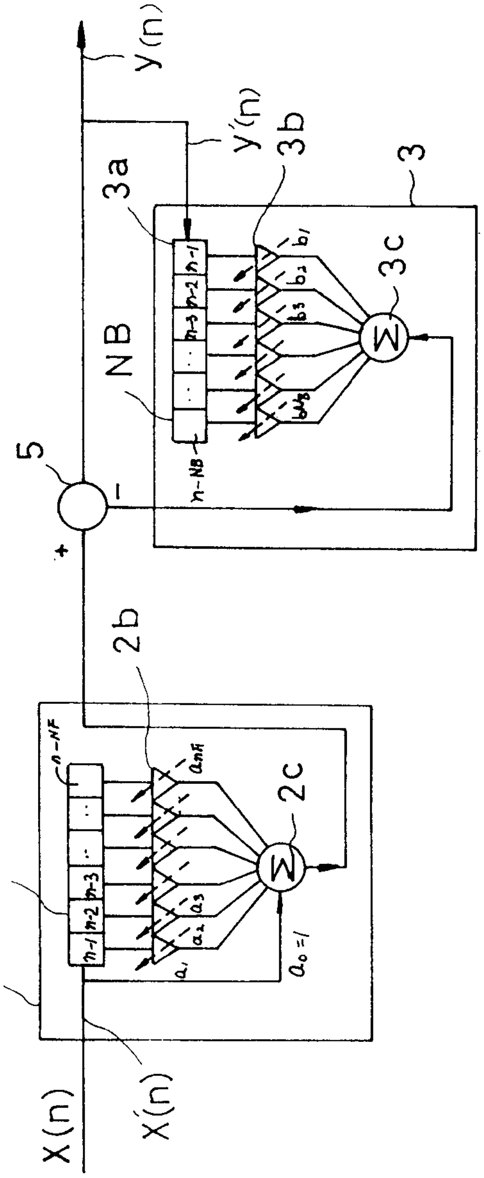

F I G. 4

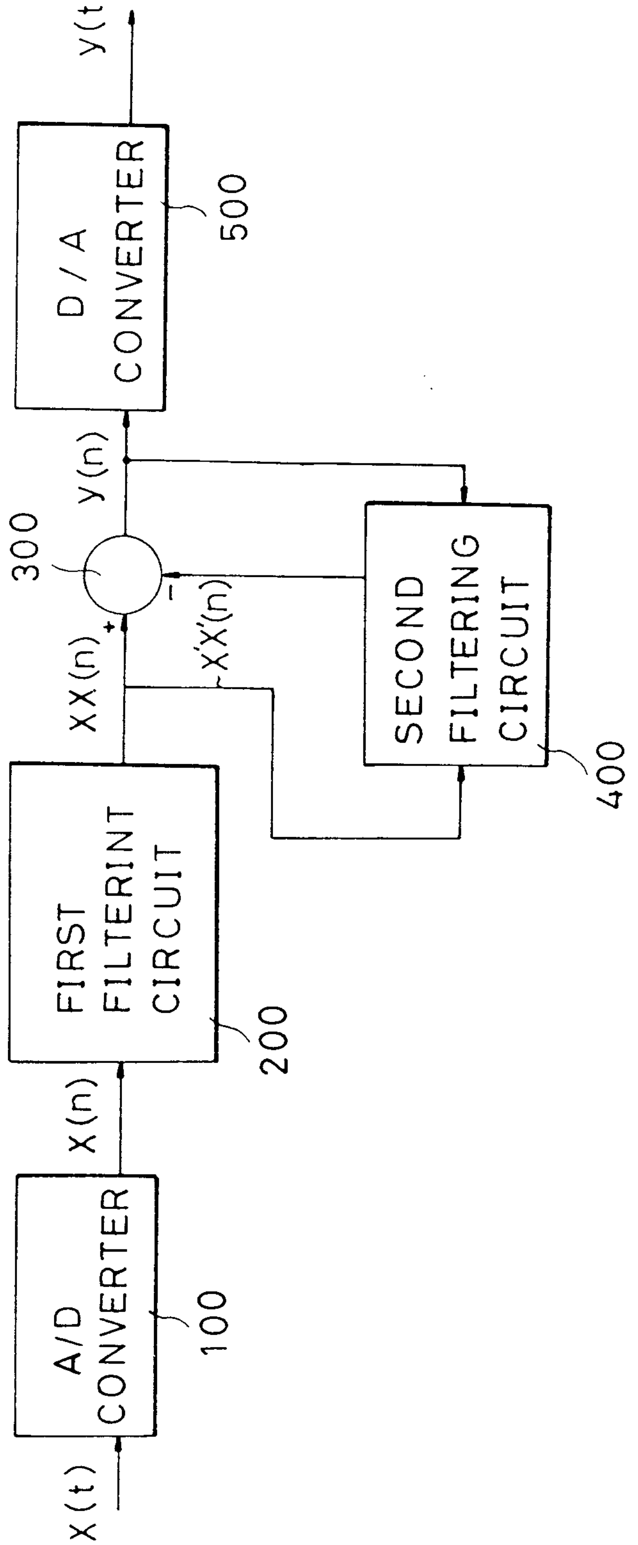
x(t)
A/D CONVERTER
100
X(n)
FIRST FILTERINT CIRCUIT
200
XX(n)
X'X'(n)
+
−
300
y(n)
SECOND FILTERING CIRCUIT
400
D/A CONVERTER
500
y(t)

F I G. 5a

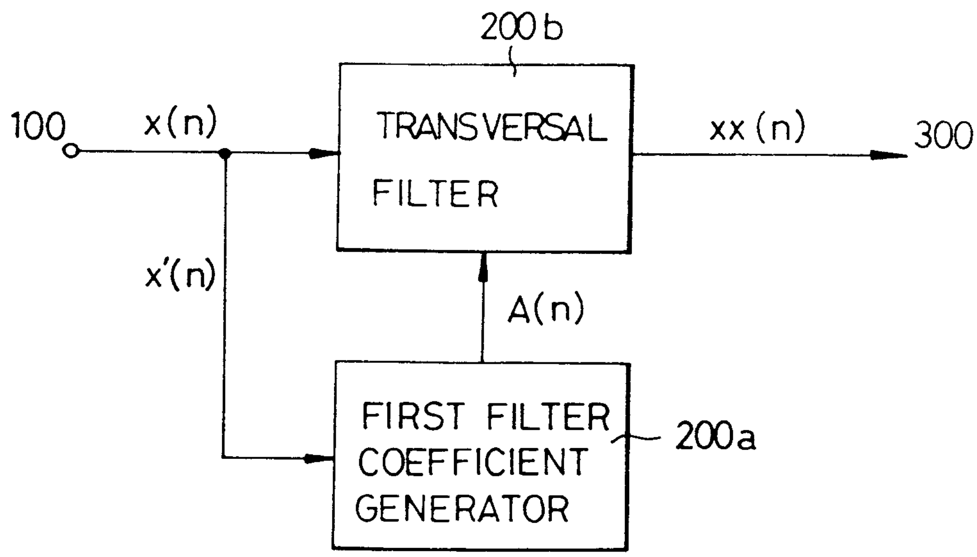
200b
100
x(n)
TRANSVERSAL
FILTER
xx(n)
300
x'(n)
A(n)
FIRST FILTER
COEFFICIENT
GENERATOR
200a

F I G. 5b

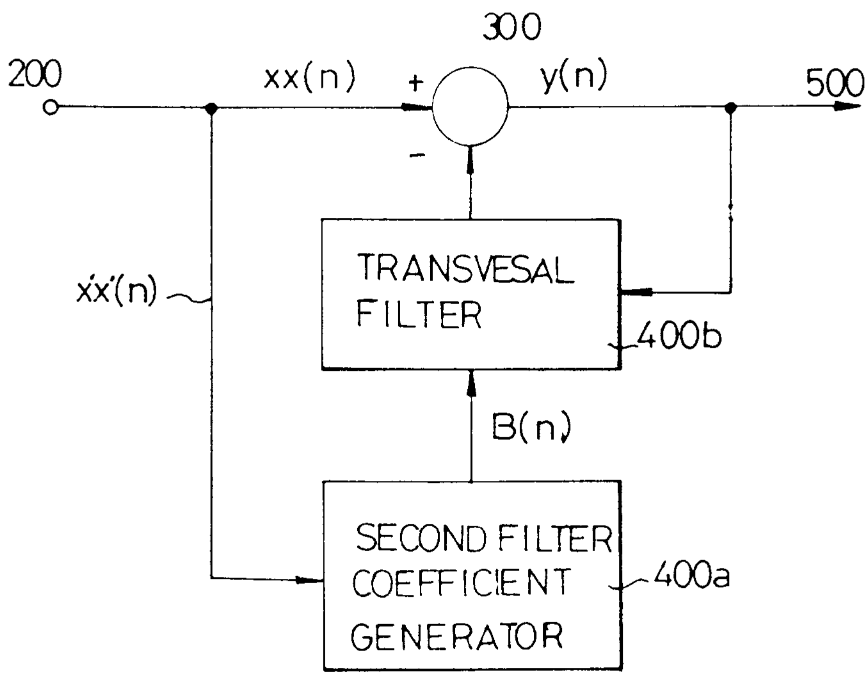
300
200
xx(n)
+
y(n)
500
-
TRANSVESAL
FILTER
x'x'(n)
400b
B(n)
SECOND FILTER
COEFFICIENT
GENERATOR
400a

F I G. 6

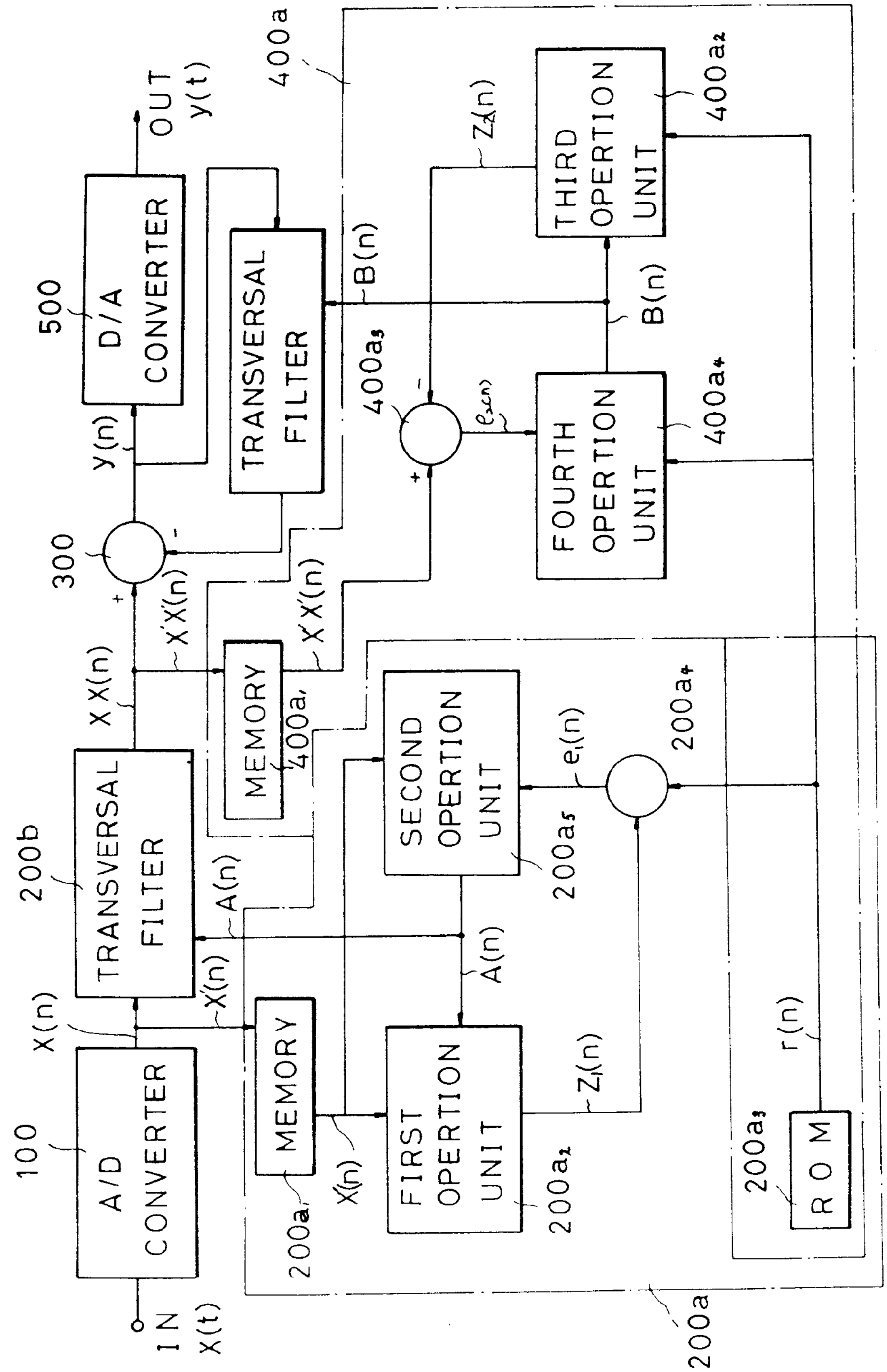
IN
x(t)
A/D CONVERTER
100
X(n)
TRANSVERSAL FILTER
200b
XX(n)
MEMORY
400a1
X'X'(n)
300
y(n)
D/A CONVERTER
500
OUT
y(t)
TRANSVERSAL FILTER
B(n)
400a
400a3
e2(n)
THIRD OPERTION UNIT
400a2
Z2(n)
FOURTH OPERTION UNIT
400a4
MEMORY
200a1
X'(n)
FIRST OPERTION UNIT
200a2
Z1(n)
SECOND OPERTION UNIT
200a5
A(n)
e1(n)
200a4
ROM
200a3
r(n)
200a

European Patent Office

# EUROPEAN SEARCH REPORT

Application Number

EP 92 40 3520

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | EP-A-0 334 339 (NEC HOME ELECTRONICS)<br>* column 1, line 1 - column 3, line 4 *<br>* column 6, line 42 - column 7, line 53 *<br>* figures 2,4-8 *<br>--- | 1-7,17<br>8-16 | H04N5/21 |
| Y | IEEE TRANSACTIONS ON CONSUMER ELECTRONICS vol. CE-27, no. 4, November 1981, NEW YORK US<br>pages 588 - 603<br>ASHARIF ET AL. 'TV Ghost Cancelling by LMS-RAT Digital Filter'<br>* page 588, right column, line 32 - page 589, right column; figures 1,2 *<br>--- | 8-16 | |
| A | IEEE TRANSACTIONS ON CONSUMER ELECTRONICS vol. 36, no. 4, November 1990, NEW YORK US<br>pages 819 - 824<br>IGA ET AL. 'Ghost Clean System'<br>* page 819, left column, paragraph 2.2 - page 821, right column, line 14 *<br>* figures 1-3 *<br>----- | 1-8,17 | |
| | | | TECHNICAL FIELDS SEARCHED (Int. Cl.5 ) |
| | | | H04N<br>H04L |

The present search report has been drawn up for all claims

| Place of search | Date of completion of the search | Examiner |
|---|---|---|
| THE HAGUE | 28 APRIL 1993 | BERWITZ P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)